# EUROPEAN PATENT APPLICATION

(11) **EP 3 490 298 A1**
(43) Date of publication of application: **29.05.2019**
(21) Application number: 17830687.4
(22) Date of filing: 22.05.2017
(51) Int. Cl.: H04W 48/08, H04W 24/10, H04W 52/18, H04W 74/08, H04W 84/12

(54) **WIRELESS COMMUNICATION DEVICE AND WIRELESS COMMUNICATION METHOD**

(30) Priority: 19.07.2016 JP 2016141125
(71) Applicant: Sony Corporation, Tokyo 108-0075 (JP)
(72) Inventor: AIO, Kosuke, Tokyo 108-0075 (JP); TANAKA, Yusuke, Tokyo 108-0075 (JP); MORIOKA, Yuichi, Tokyo 108-0075 (JP)
(74) Representative: Witte, Weller & Partner Patentanwälte mbB
(86) International application number: PCT/JP2017/019058
(87) International publication number: WO 2018/016167

(57) **Abstract**

[Object] To provide a mechanism capable of effectively utilizing wireless communication resources while avoiding collision of communication.

[Solution] A wireless communication device including: an acquisition unit that acquires reception power information of a transmission path, which is observed for a first wireless communication device that communicates with the wireless communication device; and a wireless communication unit that transmits a frame related to transmission permission in which first communication parameter information, which is decided on the basis of the acquired reception power information, with which a carrier sensing mode is specified, is stored. A wireless communication device including: a wireless communication unit that transmits a reception power notification frame in which reception power information of a frequency band, which is observed for the wireless communication device, is stored, and receives a frame related to transmission permission in which first communication parameter information is stored after the transmission of the reception power notification frame; and a control unit that controls carrier sensing for transmission of a frame that is permitted to be transmitted by the frame related to transmission permission on the basis of the first communication parameter information.

## Description

### Technical Field

The present disclosure relates to a wireless communication device and a wireless communication method.

### Background Art

In recent years, wireless local area networks (LANs) representative of Institute of Electrical and Electronics Engineers (IEEE) 802.11 have been widely used. In addition, the number of wireless LAN-compatible products (hereinafter, also referred to as wireless communication devices) have also increased in accordance with this. In contrast, wireless communication resources available for communication are limited. Therefore, it is desirable to increase the efficiency of communication between wireless communication devices.

There are technologies for controlling a communicable range as examples of technologies for enhancing efficiency of communication. For example, Patent Literature 1 discloses a wireless communication device that controls a receivable range by controlling a signal detection ability and controls a transmittable range by controlling transmission power. The wireless communication device sets the transmittable range in accordance with the amount of traffic that the device itself has and sets the receivable range in accordance with the set transmittable range. In this manner, it is considered to be possible to secure fairness of access to media and to enhance efficiency of communication as a result.

In addition, as another example of technologies for increasing the efficiency of communication, there are multiple access communication technologies. For example, the multiple access communication technologies include orthogonal frequency division multiple access (OFDMA), space division multiple access (SDMA) using multi-input multi-output (MIMO), or the like. The SDMA using MIMO is called multi-user MIMO (hereinafter, also referred to as MU-MIMO).

### Citation List

### Patent Literature

Patent Literature 1: JP 2005-253047A

### Summary of Invention

### Technical Problem

However, further improvement in efficiency of communication has been required in multiple access communication. In conventional multiple access communication, communication parameters (for example, transmission power or a modulation scheme) used to transmit a frame are designated for a device that transmits the frame in multiple access communication, for example. Therefore, it is not possible to change the receivable range in accordance with a change in the transmittable range as in the technology disclosed in Patent Literature 1. As a result, an STA 100-1 that receives signals from other devices cannot transmit a frame even if the STA 100-1 is permitted to transmit the frame, and a wireless communication resource assigned to the STA 100-1 is not utilized. If the receivable range is changed independently from the transmittable range, fairness of access to the aforementioned media, that is, to a transmission path, may be lost. Also, collision of communication may frequently occur, and efficiency of communication may be degraded.

Thus, the present disclosure proposes a mechanism capable of effectively utilizing wireless communication resources while avoiding collision of communication.

### Solution to Problem

According to the present disclosure, there is provided a wireless communication device including: an acquisition unit that acquires reception power information of a transmission path, which is observed for a first wireless communication device that communicates with the wireless communication device; and a wireless communication unit that transmits a frame related to transmission permission in which first communication parameter information, which is decided on the basis of the acquired reception power information, with which a carrier sensing mode is specified, is stored.

According to the present disclosure, there is provided a wireless communication device including: a wireless communication unit that transmits a reception power notification frame in which reception power information of a frequency band, which is observed for the wireless communication device, is stored, and receives a frame related to transmission permission in which first communication parameter information is stored after the transmission of the reception power notification frame; and a control unit that controls carrier sensing for transmission of a frame that is permitted to be transmitted by the frame related to transmission permission on the basis of the first communication parameter information.

In addition, according to the present disclosure, there is provided a wireless communication method including, by a processor: acquiring reception power information of a transmission path, which is observed for a first wireless communication device that communicates with a second wireless communication device; and transmitting a frame related to transmission permission in which first communication parameter information, which is decided on the basis of the acquired reception power information, with which a carrier sensing mode is specified, is stored.

In addition, according to the present disclosure, there is provided a wireless communication method including, by a processor to: transmitting a reception power notification frame in which reception power information of a frequency band, which is observed for a first wireless communication device, is stored, and receiving a frame related to transmission permission in which first communication parameter information is stored after the transmission of the reception power notification frame; and controlling carrier sensing for transmission of a frame that is permitted to be transmitted by the frame related to transmission permission on the basis of the first communication parameter information.

### Advantageous Effects of Invention

According to the present invention, a mechanism capable of effectively utilizing wireless communication resources while avoiding collision of communication is provided as described above. Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating a configuration example of a wireless communication system according to each embodiment of the present disclosure.
FIG. 2 is a block diagram schematically illustrating functional configurations of an STA and an AP according to each embodiment of the present disclosure.
FIG. 3 is a diagram illustrating a configuration example of information elements of an interference power notification frame in which interference power information is stored according to a first embodiment of the present disclosure.
FIG. 4 is a diagram for describing an example of UL communication parameter decision processing in an AP according to the embodiment.
FIG. 5 is a diagram for describing an example of carrier sensing threshold value decision processing in an STA according to the embodiment.
FIG. 6 is a sequence diagram schematically illustrating an example of the wireless communication system according to the embodiment.
FIG. 7 is a flowchart conceptually illustrating an example of interference power measurement processing in the STA according to the embodiment.
FIG. 8 is a flowchart conceptually illustrating an example of UL communication parameter information notification processing in the AP according to the embodiment.
FIG. 9 is a flowchart conceptually illustrating an example of frame transmission processing using carrier sensing in the STA according to the embodiment.
FIG. 10 is a diagram illustrating a configuration example of information elements in a carrier sensing result notification frame according to a second embodiment of the present disclosure.
FIG. 11 is a diagram for describing an example of UL communication parameter decision processing in an AP according to the embodiment.
FIG. 12 is a sequence diagram schematically illustrating an example of the wireless communication system according to the embodiment.
FIG. 13 is a flowchart conceptually illustrating an example of UL communication parameter information notification processing in the AP according to the embodiment.
FIG. 16 is a block diagram illustrating an example of a schematic configuration of a car navigation device.
FIG. 17 is a block diagram illustrating an example of a schematic configuration of a wireless access point.

### Description of Embodiments

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, in this specification and the drawings, there are cases in which a plurality of elements having substantially the same function are distinguished by adding different numbers to the end of the same reference numeral. For example, a plurality of elements having substantially the same function are distinguished as necessary like a STA 100A and a STA 100B. However, in a case where it is unnecessary to distinguish elements having substantially the same function, only the same reference numeral is added. For example, in a case where it is unnecessary to particularly distinguish the STA 100A and the STA 100B, they are simply referred to as "STAs 100".

In addition, the STAs 100 according to the first and second embodiments will be distinguished by adding numbers corresponding to the embodiments to the ends like an STA 100-1 and an STA 100-2 for convenience of description.

Note that description will be given in the following order.
1. Introduction
2. Configurations of system and device
3. First embodiment
   3.1. Functions of device
   3.2. Flow of processing
   3.3 Summary of first embodiment
4. Second embodiment
   4.1. Functions of device
   4.2. Flow of processing
   4.3. Summary of second embodiment
   4.4. Modification example
5. Application example
6. Conclusion

### <1. Introduction>

First, technologies in relation to a wireless communication device according to each embodiment of the present disclosure will be described. As the technologies, there are technologies related to uplink multiple user (hereinafter, also referred to as UL-MU) communication using multiple access technologies such as OFDMA or MU-MIMO as described above. In the UL-MU communication, trigger frames are transmitted from a base station to terminals that are permitted to perform UL-MU communication. UL communication parameters (for example, transmission power, frequency channels, modulation schemes, and the like) that are used in the UL-MU communication are stored in the trigger frames, and terminals that have received the trigger frames transmit frames using the UL communication parameters.

The terminals execute carrier sensing when the terminals transmit the frames. For example, the terminals determine which of an idle state (a vacant state) and a busy state (an in-use state) a state of the transmission path is, through detection of an interference power level before the transmission of the frames. In a case in which the interference power level is equal to or less than a carrier sensing threshold value (that is, the state of the transmission path is the idle state), the terminals can transmit the frames in transmission periods provided in notifications through the trigger frame. In this manner, it is possible to avoid collision of frames.

Meanwhile, technologies of controlling carrier sensing threshold values have been examined in recent years. Specifically, a technology called dynamic sensitivity control (DSC) has been proposed. According to the technology, a carrier sensing threshold value is increased (decreased) through the DSC if transmission power is decreased (increased) through transmission power control (TPC), for example. In this manner, it is considered to be possible to secure fairness of access to media, to avoid collision of communication, and to enhance efficiency of communication as a result.

However, it is difficult to apply the technology known as DSC for controlling the carrier sensing threshold value to the UL-MU communication. Since transmission power or a modulation scheme is designated by the base station as a UL communication parameter used in the UL-MU communication in a case in which the DSC is applied directly to the UL-MU communication, for example, there is a concern that the terminals that transmit UL frames will not be able to change the carrier sensing threshold value by using the DSC. Therefore, it tends to be determined that the state of the transmission path is the busy state when it is not possible to increase the carrier sensing threshold value, for example, and it is not possible to transmit the UL frames even if the trigger frames are received. As a result, transmission opportunities of the terminals may decrease, and communication efficiency may be degraded. It is also desirable to acquire transmission opportunities with compromise in a change of the modulation scheme to a modulation scheme with a relatively low data rate in some cases. Also, it is not possible to maintain fairness of access to media and also to avoid collision of communication if only the carrier sensing threshold value is changed regardless of transmission power.

Note that transmitting frames without using the UL communication parameters designated by using the trigger frames is also considered. However, if the frames are transmitted by using transmission power that the respective terminals that perform UL-MU communication with the base station have uniquely decided in this case, for example, variations occur in reception power of the frames received by the base station, and a dynamic range of the reception power increases. As a result, a load may occur in the reception processing of the base station, and reception performance may be degraded. Therefore, it is desirable that the frames be transmitted with such transmission power that a difference in reception power for the frames transmitted from the respective terminals falls within a predetermined range.

Thus, the present disclosure proposes a wireless communication system capable of effectively utilizing wireless communication resources while avoiding collision of communication and a wireless communication device for realizing the wireless communication system.

### <2. Configurations of system and device>

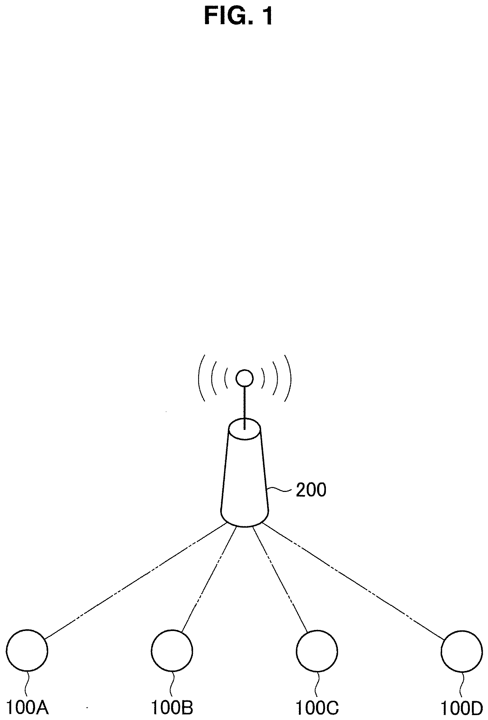

Next, configurations of the wireless communication system according to each embodiment of the present disclosure and of the wireless communication device will be described. First, the configuration of the wireless communication system will be described with reference to FIG. 1. FIG. 1 is a diagram illustrating a configuration example of the wireless communication system according to each embodiment of the present disclosure.

As illustrated in FIG. 1, the wireless communication system includes an AP 200 and a plurality of STAs 100 as wireless communication devices. For example, the AP 200 and the respective STAs 100A to 100D can communicate with each other and communicate after establishing connection for communication. A group of the AP 200 and the STAs 100 between which connection has been established corresponds to a basic service set (BSS), for example. Note that BSSs that are adjacent to the BSS illustrated in FIG. 1 (hereinafter, also referred to as adjacent BSSs) can be present although they are not illustrated in the drawing, and signals transmitted from the STAs that belong to the adjacent BSSs can be interference signals of the BSS. Also, communication systems other than a wireless LAN communication system or devices that emit electric waves for a purpose other than communication can be placed in the surroundings of the BSS. Electric waves that are transmitted from the communication systems or the devices can be interference electric waves.

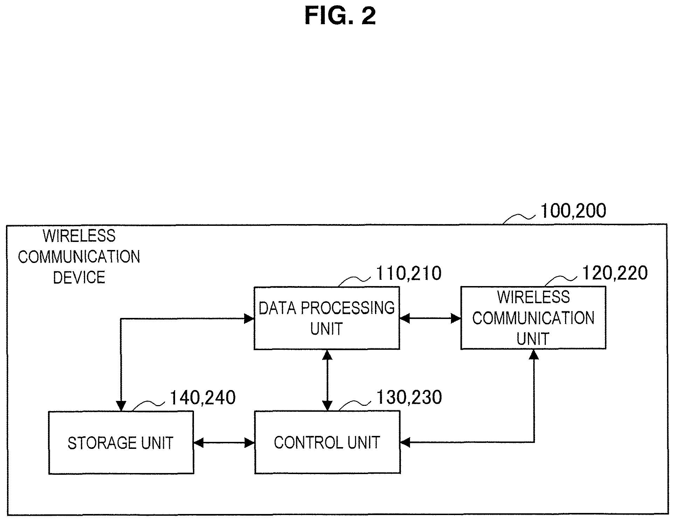

Next, functional configurations and basic functions of the STAs 100 and the AP 200 will be described with reference to FIG. 2. FIG. 2 is a block diagram schematically illustrating an example of the functional configurations of the STAs 100 and the P 200 according to each embodiment of the present disclosure. Note that since the functional configurations of the STAs 100 and the AP 200 are substantially the same, only the STAs 100 will be described.

As illustrated in FIG. 2, each STA 100 includes a data processing unit 110, a wireless communication unit 120, a control unit 130, and a storage unit 140.

The data processing unit 110 performs processing for transmitting and receiving data as a part of an acquisition unit. Specifically, the data processing unit 110 generates a frame on the basis of data from a higher communication layer and provides the generated frame to a wireless communication unit 120. For example, the data processing unit 110 performs processing of generating a frame (or a packet) from data and adding a media access control (MAC) header for MAC or adding a detection code or the like to the generated frame. Also, the data processing unit 110 extracts data from a received frame and provides the extracted data to a higher communication layer. For example, the data processing unit 110 acquires data by performing, on the received frame, analysis of the MAC header, code error detection and correction, reordering processing, and the like.

The wireless communication unit 120 performs signal processing such as modulation and demodulation of frames and transmits and receives signals via an antenna. Specifically, the wireless communication unit 120 adds a physical layer (PHY) header to a frame provided from the data processing unit and performs encoding, interleaving, and modulation thereon in accordance with coding, a modulation scheme, and the like set by the control unit 130, thereby generating a symbol stream. Then, the wireless communication unit 120 converts a signal related to an obtained symbol stream into an analog signal, amplifies the signal, filters the signal, and performs frequency up-conversion thereon. Then, the wireless communication unit 120 transmits the processed signal via the antenna. Also, the wireless communication unit 120 performs processing opposite to processing performed when a signal is transmitted, for example, frequency downconverting, digital signal conversion, and the like on a signal obtained via the antenna, thereby obtaining a symbol stream. Then, the wireless communication unit 120 acquires a frame by performing demodulation, decoding, and the like on the obtained symbol stream and provides the acquired frame to the data processing unit 110 or the control unit 130. Note that PHY header analysis processing may be performed by the wireless communication unit 120.

The control unit 130 controls overall communication of the STA 100. Specifically, the control unit 130 performs processing such as exchanging of information between the respective functions, setting of UL communication parameters, and scheduling of frames (or packets) in the data processing unit 110. In a case in which the wireless communication device is the AP 200, in particular, the control unit 230 performs decision of UL communication parameters related to UL-MU communication, a UL-MU communication group, and the like.

The storage unit 140 stores information that is used in processing of the data processing unit 110 or the control unit 130. Specifically, the storage unit 140 stores information stored in frames, information acquired from frames, information of UL communication parameters, and the like.

### <3. First embodiment>

Next, a first embodiment of the present disclosure will be described. In the first embodiment, a carrier sensing mode for UL-MU communication in each STA 100-1 is decided on the basis of interference power information provided in a notification from the STA 100-1.

### <3.1. Functions of device>

First, the respective functions of the STAs 100-1 and an AP 200-1 that serve as wireless communication devices according to the embodiment will be described.

### (Measurement of interference power)

The STA 100-1 observes reception power (hereinafter, also referred to as interference power) of electric waves (hereinafter, also referred to as interference electric waves) that are handled as interference of signals, which the STA 100-1 itself is to receive, in the transmission path. Specifically, the wireless communication unit 120 observes reception power of interference electric waves transmitted from devices other than the other wireless communication devices that belong to a wireless communication network group to which the STA 100-1 itself belongs. More specifically, the wireless communication unit 120 determines whether or not received electric waves are interference electric waves by using processing of receiving electric waves or signals and measures reception power of electric waves, which have been determined as interference electric waves, as interference power.

For example, the control unit 130 controls starting and stopping of observation of the interference power performed by the wireless communication unit 120. The wireless communication unit 120 measures a reception power level (hereinafter, also referred to as a reception level) if electric waves are received. In addition, the wireless communication unit 120 attempts to detect signals if electric waves are received. In detail, the wireless communication unit 120 attempts to detect a PHY header. If a PHY header is detected, the wireless communication unit 120 further determines whether or not the received signal is directed to a BSS to which the STA 100-1 itself belongs (hereinafter, also referred to as its own BSS). In a case in which the PHY header is not detected, or in a case in which the received signal is not directed to its own BSS, the wireless communication unit 120 determines that the received electric waves are interference electric waves and causes the storage unit 140 to store the observed reception level as interference power information. Note that, if it is determined that the received signal is directed to its own BSS, the wireless communication unit 120 receives the following part of the PHY header.

Here, there is a conventional technology in which a notification of information related to signal noise observed in an STA is provided to an AP. The IEEE 802.11 standards, for example, define that an STA observes a degree of signal noise (hereinafter, also referred to as a noise level) in a predetermined period and provides a notification of histogram data based on observation values to an AP.

However, according to the technology, observation has to be performed in a state in which the other STAs or the AP that belong to the BSS to which the STA that observes the noise level belongs are not emitting electric waves. In other words, electric wave emission, that is, communication of the other STAs or the AP, is caused to stop in the observation period. Therefore, if the observation period is extended, a communication stopping period is also extended, and communication performance of the entire wireless communication system may be degraded. Meanwhile, if the observation period becomes short, it becomes impossible to recognize variations in interference power over a long period, and accuracy or precision of processing using the interference power information (for example, carrier sensing mode deciding processing, which will be described later) may be degraded.

Meanwhile, in the STA 100-1 according to the embodiment, it is possible to observe interference power without causing communication to be stopped, by performing the aforementioned measurement of the interference power using the processing of receiving electric waves or signals.

Note that the interference power information may be information of observation values or information obtained by processing the observation values. For example, the interference power information may be statistical information such as histogram data, a maximum value, an average value, or a cumulative value based on interference power values in addition to the interference power value.

In addition, the wireless communication unit 120 may reset the interference power information. For example, the wireless communication unit 120 may reset the interference power information every time a notification of the interference power information is provided to the AP 200-1 or may reset the interference power information every time a predetermined time elapses.

### (Notification of interference power information)

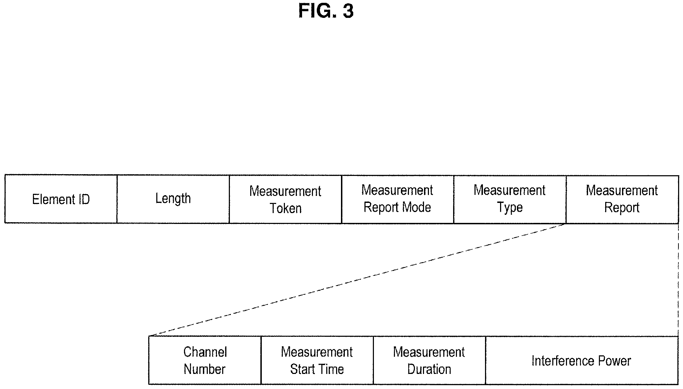

The STA 100-1 provides a notification of interference power information obtained through observation to the AP 200-1. Specifically, the control unit 130 causes a data processing unit 110 to generate a frame in which interference power information obtained by the wireless communication unit 120 is stored (hereinafter, also referred to as an interference power notification frame) every time a predetermined time elapses and causes the wireless communication unit 120 to transmit the generated interference power notification frame. Components of the interference power notification frame will be described with reference to FIG. 3. FIG. 3 is a diagram illustrating a configuration example of information elements in an interference power notification frame in which interference power information is stored according to the embodiment.

The interference power notification frame has information elements in which interference power information is stored. For example, the information elements are information elements based on an existing measurement report. As illustrated in FIG. 3, the information elements have fields such as Element ID (identifier), Length, Measurement Token, Measurement Report Mode, Measurement Type, and Measurement Report. Also, Measurement Report has a field Interference Power in addition to Channel Number, Measurement Start Time, and Measurement Duration. The interference power information is stored in the Interference Power field. In a case in which interference power information is stored, for example, information indicating a measurement report for providing a notification of the interference power information is stored in the Measurement Type field by adding bits, for example.

Note that the interference power notification frame may be a frame that is communicated for a purpose other than communication of the interference power information. For example, the interference power notification frame may be a UL data frame in which the interference power information is stored or may be a frame exclusively for delivery of the interference power information.

### (Decision of UL communication parameters based on interference power information)

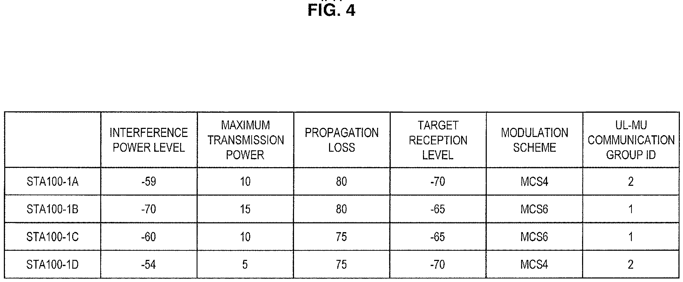

The AP 200-1 decides UL communication parameter information of each STA 100-1 on the basis of interference power information. Specifically, the control unit 230 decides information with which a carrier sensing threshold value in the STA 100-1 is specified as first communication parameter information on the basis of the interference power information stored in the received interference power notification frame. For example, the control unit 230 decides transmission power information on the basis of comparison between the interference power information provided in the notification from the STA 100-1 and the carrier sensing threshold value and decides a target reception level of a signal that the AP 200-1 receives from the STA 100-1 on the basis of the decided transmission power information. UL communication parameter deciding processing will be specifically described with reference to FIG. 4. FIG. 4 is a diagram for describing an example of UL communication parameter deciding processing in the AP 200-1 according to the embodiment.

The control unit 230 decides a change value of maximum transmission power of the STA 100-1 from a difference between an interference power level that the interference power information provided in the notification indicates and a standard carrier sensing threshold value. The standard carrier sensing threshold value is a carrier sensing threshold value in a case in which the aforementioned DSC is not performed. For example, a case in which the standard carrier sensing threshold value of the STA 100-1 is -62 dBm and the maximum transmission power is 15 dBm will be considered. In this case, since interference power levels of the STA 100-1A, 100-1C, and 100-1D exceed the standard carrier sensing threshold value in the example in FIG. 4, the control unit 230 calculates the amounts of decrease in maximum transmission power by subtracting the standard carrier sensing threshold value from the interference power levels. Then, the control unit 230 decides the maximum transmission power by subtracting the calculated values from the maximum transmission power values. Since the interference power level is -59 dBm in the example of the STA 100-1A, the maximum transmission power is decided to be 12 dBm that is 3 dB lower. Note that in a case in which the transmission power is set in units of 5 dB, the maximum transmission power of the STA 100-1A is decided to be 10 dBm. Similarly, the maximum transmission power of the STA100-1C is decided to be 10 dBm while the maximum transmission power of the STA 100-1D is decided to be 5 dBm.

Next, the control unit 230 decides a target reception level from a difference between the maximum transmission power after change and an estimated propagation loss. For example, the control unit 230 decides a value obtained by subtracting the propagation loss from the decided maximum transmission power of each STA 100-1 as a target reception level. In the example of the STA 100-1A, -70 dBm that is obtained by subtracting the propagation loss of 80 dB from the maximum transmission power 10 dBm is decided as the target reception level. Note that the propagation loss may be calculated from a difference between transmission power and reception power of signals that have been received by the AP 200-1 until now or may be provided through a notification from an external device.

Note that the control unit 230 may decide information with which presence or absence of carrier sensing is specified instead of deciding information with which the carrier sensing threshold value is specified, as the first communication parameter information. Specifically, the control unit 230 decides presence or absence of carrier sensing on the basis of comparison between the interference power information and the carrier sensing threshold value. In a case in which the interference power that the interference power information indicates is lower than the standard carrier sensing threshold value, for example, the control unit 230 may decide not to execute carrier sensing, and information indicating that may be stored in a trigger frame, which will be described later.

Further, the control unit 230 decides another type of UL communication parameter information as second communication parameter information on the basis of the interference power information. Specifically, the control unit 230 decides information related to a modulation scheme or coding in accordance with the target reception level decided from the interference power information. For example, the control unit 230 decides a modulation and coding set (MCS) with a data rate or redundancy in accordance with how high the target reception level is. Since the target reception level in the example of the STA 100-1A is -70 dBm, which is lower than -65 dBm of the STA 100-1B, the modulation scheme is decided to be MCS4 with a lower data rate (that is, higher redundancy) than MCS6 of the STA 100-1B. Note that the modulation scheme and the coding rate may be decided on the basis of another method. For example, the MCS may be decided on the basis of a reception environment (for example, a noise level) of the AP 200-1.

Note that in a case in which a notification of the interference power information is provided for each frequency, the control unit 230 decides a communication frequency on the basis of the interference power information for each frequency. For example, information as illustrated in FIG. 4 is collected or decided for each frequency, and the control unit 230 decides a frequency that the STA 100-1 is caused to use on the basis of a part or entirety of the information.

In addition, the AP 200-1 may decide UL communication parameters every time the notification of the interference power information is provided or may decide UL communication parameters every time the number of times the notification of the interference power information is provided reaches a predetermined number of times. For example, the control unit 230 may decide UL communication parameters such as a target reception level by using an average value of a plurality of interference power information pieces or the like. In addition, in a case in which a notification of interference power information in a histogram form is provided, whether or not the UL communication parameters have been changed may be decided on the basis of the number of counts, the frequency of counts, or the like of a power range (unit data) that exceeds the standard carrier sensing threshold value.

### (Decision of multiple access communication group based on interference power information)

The AP 200-1 decides a multiple access communication group on the basis of interference power information. Specifically, the control unit 230 decides the UL-MU communication group on the basis of a target reception level decided from the interference power information. For example, the control unit 230 decides STAs 100-1 with the same target reception level as illustrated in FIG. 4 as members of the same UL-MU communication group. Since the target reception levels of the STAs 100-IB and 100-1C are -65 dB and the same in the example in FIG. 4, the STAs 100-IB and 100-1C are decided as members of a UL-MU communication group with a group ID of "1". Similarly, since the target reception levels of the STAs 100-1A and 100-1D are -70 dBm and the same, the STAs 100-1A and 100-1D are decided as members of a UL-MU communication group with a group ID of "2".

Note that although the example in which the STAs 100-1 with the same target reception level are decided as members of the same UL-MU communication group has been described above, STAs 100-1 with differences of target reception levels that fall within a predetermined range may be decided as members of the same UL-MU communication group. In addition, types, amounts, and the like of traffic buffered by the STAs 100-1 may be taken into consideration when the UL-MU communication group is decided.

### (Notification of transmission permission)

The AP 200-1 provides a notification of transmission permission to each STA 100-1. Specifically, the control unit 230 causes the data processing unit 210 to generate a frame related to transmission permission for multiple access communication, in which decided UL communication parameter information is stored, and causes the wireless communication unit 220 to transmit the generated frame related to transmission permission. For example, the control unit 230 causes the data processing unit 210 to generate a trigger frame directed to the UL-MU communication group, in which information indicating a target reception level, MCS, and a communication frequency is stored, and causes the wireless communication unit 220 to transmit the generated trigger frame.

Note that a notification of the UL communication parameter information may be provided to each STA 100-1 by using a frame other than the trigger frame. For example, the UL communication parameter information may be stored in a group notification frame for providing a notification of the UL-MU communication group or may be stored in a DL frame for another communication purpose. Also, the multiple access may be frequency division multiple access, orthogonal frequency division multiple access, space division multiple access, code division multiple access, or time division multiple access.

### (Carrier sensing)

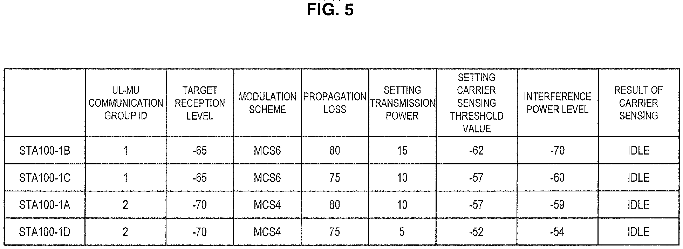

Each STA 100-1 controls carrier sensing on the basis of transmission permission provided in a notification. Specifically, the control unit 130 controls carrier sensing for a frame that is permitted to be transmitted by a transmission permission frame, on the basis of UL communication parameter information stored in a frame related to transmission permission. For example, the control unit 130 decides a carrier sensing threshold value on the basis of a target reception level stored in a received trigger frame. Carrier sensing threshold value deciding processing will be described with reference to FIG. 5. FIG. 5 is a diagram for describing an example of carrier sensing threshold value deciding processing in the STA 100-1 according to the embodiment.

First, the control unit 130 decides setting transmission power on the basis of the target reception level stored in the received trigger frame and the propagation loss. For example, since the target reception level provided in the notification is -70 dBm in the example of the STA 100-1B, 15 dBm obtained by adding the propagation loss of 80 dB to -65 dBm is decided as setting transmission permission of the STA 100-1A. Similarly, 10 dBm, 10dBm, ad 5 dBm are decided as setting transmission power of the STA 100-C, the STA 100-1A, and the STA 100-1D, respectively.

Next, the control unit 130 decides the carrier sensing threshold value on the basis of the setting transmission power. Specifically, the control unit 130 decides the carrier sensing threshold value on the basis of a difference between the maximum transmission power and the setting transmission power. For example, the control unit 130 calculates a difference between the maximum transmission power and the setting transmission power and decides a value obtained by adding the calculated value to the standard carrier sensing threshold value as the setting carrier sensing threshold value. In the example of the STA 100-1C, the difference from the maximum transmission power is 5 dB since the setting transmission power is 10 dBm. Therefore, the setting carrier sensing threshold value is decided to be -57 dBm that is a value obtained by adding the difference of 5 dB to the standard carrier sensing threshold value of -62 dBm. Similarly, -62 dBm, -57 dBm, and -52 dBm are decided to be the setting carrier sensing threshold values for the STA 100-1B, the STA 100-1A, and the STA 100-1D, respectively.

Then, the control unit 130 executes carrier sensing using the setting carrier sensing threshold value in accordance with arrival of a transmission period designated by the frame related to transmission permission. In the example in FIG. 5, the state of the transmission path is determined to be the idle state since the interference power levels of all the STAs 100-1A to 100-1D are below the setting carrier sensing threshold values. Note that in a case in which carrier sensing is performed by using the standard carrier sensing threshold value, the interference power levels of the STAs 100-1 other than the STA 100-IB are above the standard carrier sensing threshold value, the state of the transmission path is thus determined to be the busy state, and the transmission of a frame, which will be described later, is not performed.

### (Multiple access communication)

Each STA 100-1 transmits a frame on the basis of a result of carrier sensing. Specifically, if the state of the transmission path is determined to be the idle state by the carrier sensing, the control unit 130 causes the data processing unit 110 to generate a UL frame by using UL communication parameter information provided in the notification of the frame related to transmission permission and causes the wireless communication unit 120 to transmit the generated frame. For example, the control unit 130 sets a modulation scheme and a communication frequency, which are provided in the notification through the trigger frame, as UL communication parameters and causes the wireless communication unit 120 to transmit the UL frame with the decided setting transmission power. In this manner, UL frames transmitted from a plurality of STAs 100-1 are multiplexed by the plurality of STAs 100-1, which have received trigger frames as members of the UL-MU communication group, simultaneously transmitting the UL frames.

The AP 200-1 receives multiplexed UL frames transmitted in accordance with trigger frames. Specifically, the wireless communication unit 220 separates the respective UL frames from a multiplexed frame received after the transmission of the trigger frame, and the data processing unit 210 performs reception processing on the separated UL frames. Then, data obtained through the reception processing is provided to a higher communication layer, the control unit 230, or the like.

### <3.2. Flow of processing>

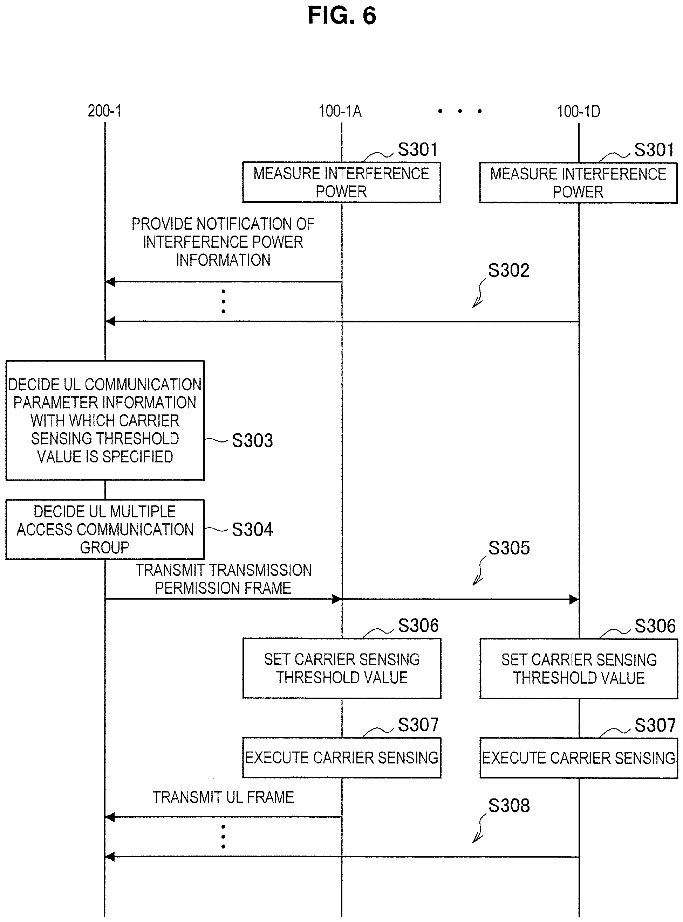

Next, a flow of processing of the wireless communication system according to the embodiment will be described with reference to FIG. 6. FIG. 6 is a sequence diagram conceptually illustrating an example of the processing of the wireless communication system according to the embodiment.

The STAs 100-1A to 100-ID respectively periodically measure interference power (Step S301). Then, the STAs 100-1A to 100-1D respectively provide notifications of interference power information obtained through measurement to the AP 200-1 (Step S302). Note that the interference power notification frames in which interference power information is stored may be multiplexed.

The AP 200-1 that has received the interference power information decides UL communication parameter information, with which carrier sensing threshold value is specified, on the basis of the interference power information (Step S303). In addition, the AP 200-1 decides a UL multiple access communication group on the basis of the interference power information (Step S304). Then, the AP 200-1 transmits transmission permission frames, in which the UL communication parameter information is stored, to the STAs 100-1A to 100-1D that are members of the UL multiple access group.

The STAs 100-1A to 100-1D that have received the transmission permission frames respectively set carrier sensing threshold values (Step S306). Next, the STAs 100-1A to 100-1D respectively execute carrier sensing by using the set carrier sensing threshold values (Step S307). Then, the STAs 100-1A to 100-1D transmit UL frames to the AP 200-1 on the basis of results of the carrier sensing. The UL frames transmitted from the STAs 100-1A to 100-1D are multiplexed as a result.

Then, processing of the STAs 100-1 and the AP 200-1 according to the embodiment will be individually described.

### (Interference power measurement processing of STA)

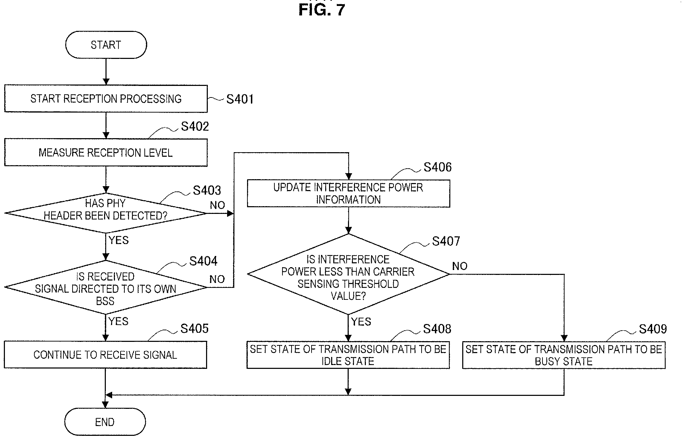

First, interference power measurement processing performed by each STA 100-1 will be described with reference to FIG. 7. FIG, 7 is a flowchart conceptually illustrating an example of interference power measurement processing performed by the STA 100-1 according to the embodiment.

The STA 100-1 starts reception processing (Step S401). Specifically, the control unit 130 causes the wireless communication unit 120 to start processing of receiving electric waves or signals.

Next, the STA 100-1 measures a reception level (Step S402). Specifically, if reception of electric waves is detected, the wireless communication unit 120 measures a reception level of the detected electric waves.

In addition, the STA 100-1 determines whether or not a PHY header has been detected (Step S403). Specifically, the wireless communication unit 120 determines whether or not a PHY header is incorporated in the received electric waves. In other words, the wireless communication unit 120 determines whether or not the received electric waves are wireless LAN communication signals.

If it is determined that a PHY header has been detected (Step S403/YES), the STA 100-1 determines whether or not the received signal is a signal directed to its own BSS (Step S404). Specifically, the wireless communication unit 120 determines whether or not a BSS that BSS information stored in the PHY header indicates is its own BSS. For example, the BSS information may be a BSS identifier such as BSS Color. Note that the BSS information may be an identifier of the AP 200-1.

If it is determined that the received signal is a signal directed to its own BSS (Step S404/YES), the STA 100-1 continues to receive signals (Step S405). Specifically, the wireless communication unit 120 receives the following part of the PHY header (for example, MPDU). That is, the wireless communication unit 120 receives the entire frame.

Meanwhile, in a case in which the PHY header has not been detected (Step S403/NO), or in a case in which the received signal is not a signal directed to its own BSS (Step S404/NO), the STA 100-1 determines the received electric waves as interference electric waves and updates interference power information on the basis of a reception level of the electric waves (Step S406). Specifically, the wireless communication unit 120 causes the storage unit 140 to store the measured reception level as interference power information via the control unit 130. Note that in a case in which the measured reception level exceeds a reception level that has already been stored as interference power information, the wireless communication unit 120 may update the stored interference power information by using a value of the measured reception level.

Next, the STA 100-1 determines whether or not the interference power is less than the carrier sensing threshold value (Step S407). Specifically, the control unit 130 determines whether or not the measured interference power (that is, the reception level) is less than the setting carrier sensing threshold value.

If it is determined that the interference power is less than the carrier sensing threshold value (Step S407/YES), the STA 100-1 sets a state of the transmission path to be the idle state (Step S408). Specifically, the control unit 130 regards the transmission path as being vacant and sets the state of the transmission path to be the idle state.

Meanwhile, if it is determined that the interference power is equal to or greater than the carrier sensing threshold value (Step S407/NO), the STA 100-1 sets the state of the transmission path to be the busy state (Step S409). Specifically, the control unit 130 regards the transmission path as being in use and sets the state of the transmission path to be the busy state.

### (UL communication parameter information notification processing of AP)

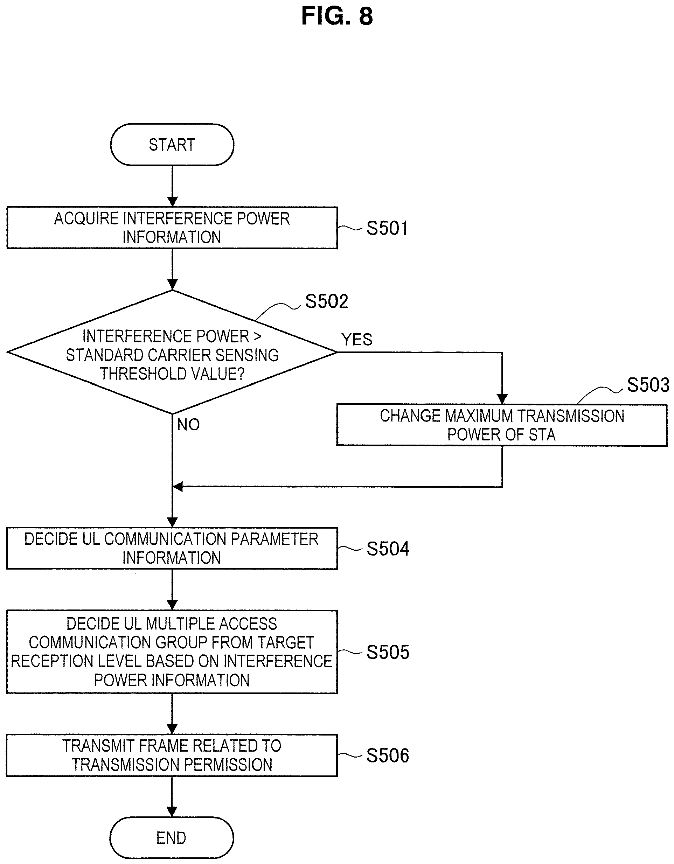

Next, UL communication parameter information notification processing performed by the AP 200-1 will be described with reference to FIG. 8. FIG. 8 is a flowchart conceptually illustrating an example of UL communication parameter information notification processing performed by the AP 200-1 according to the embodiment.

The AP 200-1 acquires interference power information (Step S501). Specifically, the control unit 230 acquires interference power information stored in the interference power notification frame received from each STA 100-1 or processed interference power information.

Next, the AP 200-1 determines whether or not the interference power is greater than the standard carrier sensing threshold value (Step S502). Specifically, the control unit 230 determines whether or not the interference power that the acquired interference power information indicates is greater than the standard carrier sensing threshold value.

If it is determined that the interference power is greater than the standard carrier sensing threshold value (Step S502/YES), the AP 200-1 decides maximum transmission power of the STA 100-1 (Step S503). Specifically, the control unit 230 changes the maximum transmission power of the STA 100-1 from a difference between the interference power that the interference power information indicates and the standard carrier sensing threshold value.

Next, the AP 200-1 decides UL communication parameter information on the basis of the interference power information (Step S504). Specifically, the control unit 230 decides a target reception level from the changed maximum transmission power and the propagation loss. Also, an MCS is decided on the basis of the decided target reception level.

Next, the AP 200-1 decides a UL multiple access communication group from the target reception level based on the interference power information (Step S505). Specifically, the control unit 230 decides STAs 100-1 with decided target reception levels that fall within the same range as members of the same UL-MU communication group.

Next, the AP 200-1 transmits a transmission permission frame in which UL communication parameters are stored to each member of the UL multiple access communication group (Step S506). Specifically, the control unit 230 causes the data processing unit 210 to generate a trigger frame, in which UL communication parameter information such as a target reception level, an MCS, and a communication frequency is stored, which is directed to the UL-MU communication group, and causes the wireless communication unit 220 to transmit the generated trigger frame.

### (Frame transmission processing using carrier sensing of STA)

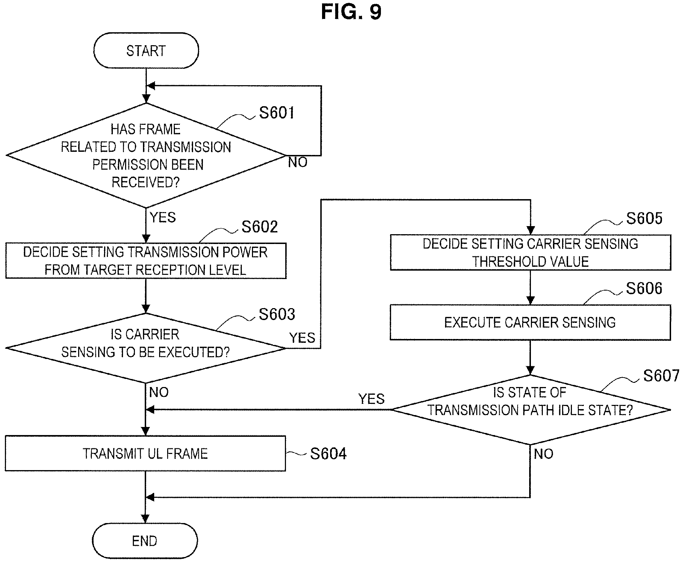

Next, UL frame transmission processing using carrier sensing performed by each STA 100-1 will be described with reference to FIG. 9. FIG. 9 is a flowchart conceptually illustrating an example of UL frame transmission processing using carrier sensing performed by the STA 100-1 according to the embodiment.

The STA 100-1 determines whether or not a transmission permission frame has been received (Step S601). Specifically, the control unit 130 determines whether or not a trigger frame has been received from the AP 200-1.

If it is determined that the transmission permission frame has been received (Step S601/YES), the STA 100-1 decides transmission power from the target reception level (Step S602). Specifically, the control unit 130 decides setting transmission power from the target reception level stored in the received trigger frame and the propagation loss.

Next, the STA 100-1 determines whether or not carrier sensing is to be executed (Step S603). Specifically, the control unit 130 determines whether or not to execute carrier sensing on the basis of the information indicating whether or not the carrier sensing is to be executed, which is stored in the trigger frame. Note that in a case in which the information indicating whether or not the carrier sensing is to be executed is not stored in the trigger frame, the processing in this step may be omitted, and the processing may proceed to Step S605.

If it is determined not to execute the carrier sensing (Step S603/NO), the STA 100-1 transmits a UL frame (Step S604). Specifically, the control unit 130 causes the data processing unit 110 to generate a UL frame in accordance with arrival of a UL frame transmission period that is provided in a notification through the trigger frame without executing the carrier sensing and causes the wireless communication unit 120 to transmit the generated UL frame.

Meanwhile, if it is determined to execute the carrier sensing (Step S603/YES), the STA 100-1 sets a carrier sensing threshold value (Step S605). Specifically, the control unit 130 decides a setting carrier sensing threshold value on the basis of a difference between the decided setting transmission power and the maximum transmission power and the standard carrier sensing threshold value.

Next, the STA 100-1 executes the carrier sensing (Step S606). Specifically, the control unit 130 causes the wireless communication unit 120 to execute the carrier sensing by using the decided setting carrier sensing threshold value and checks the state of the transmission path.

Next, if it is determined that the state of the transmission path is the idle state (Step S607/YES), the processing proceeds to Step S604 in which the UL frame is transmitted by the STA 100-1. Meanwhile, if it is determined that the state of the transmission path is the busy state (Step S607/NO), the STA 100-1 does not transmit the UL frame and causes the processing to end. Specifically, if it is determined that the state of the transmission path is the idle state, that is, if it is determined that the transmission path is vacant, the control unit 130 causes the data processing unit 110 to generate a UL frame and causes the wireless communication unit 120 to transmit the generated UL frame. Meanwhile, if it is determined that the state of the transmission path is the busy state, that is, if it is determined that the transmission path is in use, the control unit 130 causes the processing to end without causing the UL frame to be transmitted.

### <3.3. Summary of first embodiment>

According to the first embodiment of the present disclosure, the AP 200-1 acquires reception power information of the transmission path observed for each STA 100-1 that communicates with the AP 200-1 and transmits a frame related to transmission permission in which first communication parameter information, which is decided on the basis of the acquired reception power information (interference power information), with which a carrier sensing mode is specified, is stored, as described above. Also, each STA 100-1 transmits an interference power notification frame in which the aforementioned reception power information is stored and receives a transmission permission frame in which the first communication parameter information is stored after the transmission of the interference power notification frame. Then, the STA 100-1 controls carrier sensing for transmission of a UL frame that is permitted to be transmitted by a frame related to transmission permission on the basis of the first communication parameter information.

Conventionally, fairness of access to the transmission path is secured while collision of communication is avoided by using DSC or the like to control a carrier sensing threshold value in accordance with transmission power. However, since UL communication parameters such as transmission power are designated in UL-MU communication, it is not possible to substantially control the carrier sensing threshold value. Therefore, there is a concern that it may not be possible to transmit a UL frame regardless of a transmission opportunity given in communication performed in accordance with transmission permission, such as UL-MU communication and that communication efficiency is degraded.

Meanwhile, according to the embodiment, it is possible to suppress interruption of frame transmission from the STA 100-1 that has been permitted to perform transmission due to carrier sensing by a carrier sensing mode of the STA 100-1 being decided on the basis of interference power information of the STA 100-1. That is, it is possible to more reliably increase probability that the STA 100-1 that has been permitted to perform transmission transmits a UL frame. Therefore, it is possible to effectively utilize wireless communication resources while avoiding collision of communication due to carrier sensing.

In addition, the aforementioned reception power information is acquired from a reception power notification frame received from the STA 100-1. Therefore, it is possible to enhance accuracy of a carrier sensing mode by the interference power information provided in a notification from the STA 100-1 being used in the processing related to the decision of the carrier sensing mode. Accordingly, it is possible to more reliably effectively utilize wireless communication resources.

In addition, the aforementioned first communication parameter information includes information with which a threshold value or presence or absence of carrier sensing is specified. Also, the STA 100-1 decides presence or absence or a threshold of carrier sensing on the basis of the first communication parameter information. Therefore, it is possible to allow the STA 100-1 that is permitted to perform transmission to easily transmit a UL frame while causing the STA 100-1 to perform carrier sensing by the carrier sensing threshold value being controlled in accordance with interference power. Also, it is possible to more reliably cause the STA 100-1 that is permitted to perform transmission to transmit the UL frame without causing the STA 100-1 to perform carrier sensing, by presence or absence of carrier sensing being controlled in accordance with the interference power. Also, it is possible to reduce a processing time or a processing load related to the carrier sensing.

In addition, the communication that the aforementioned frame related to transmission permission indicates permission includes multiple access communication. Therefore, it is possible to effectively utilize wireless communication resources assigned to each STA 100-1 that is permitted to perform transmission in multiple access communication by UL communication parameters designated in the multiple access communication being decided on the basis of interference power information.

Also, targets of the aforementioned multiple access communication are decided on the basis of target reception power information decided from the reception power information. In addition, the aforementioned first communication parameter information includes target reception power information, and each STA 100-1 decides transmission power for transmission of the UL frame that is permitted to be transmitted in accordance with the target reception power information. Therefore, it is possible to match reception levels of UL frames transmitted from the members of the multiple access communication group. Therefore, it is possible to maintain or enhance reception performance of the AP 200-1 in the multiple access communication.

In addition, a second communication parameter information of a type that is different from the first communication parameter information is stored in the aforementioned frame related to transmission permission. Therefore, it is possible to reduce the amount of communication as compared with a case in which information, with which a carrier sensing mode is specified, is transmitted with a separate frame, by a notification of the information, with which the carrier sensing mode is specified, being provided along with UL communication parameters.

In addition, the aforementioned second communication parameter information includes information related to a modification scheme or coding decided in accordance with the first communication parameter information. Here, information related to reception performance of the AP 200-1 (for example, a target reception level) is included in the information, with which the carrier sensing mode is specified. Therefore, it is possible to prompt the STA 100-1 to perform transmission without degrading the reception performance of the AP 200-1 by other UL communication parameters related to reception performance such as a modulation scheme being decided in accordance with the information, with which the carrier sensing mode is specified.

In addition, each STA 100-1 observes reception power related to reception power information, and the reception power information includes reception power information that is observed for electric waves transmitted from devices other than the other wireless communication devices that belong to the group of the wireless communication network that the STA 100-1 belongs. Conventionally, there is a case in which communication of the other wireless communication devices that belong to the same BSS is stopped due to observation of a noise level. Therefore, there is a concern that communication efficiency is degraded due to the observation. Meanwhile, the STA 100-1 measures reception power of electric waves or signals transmitted from devices that do not belong to its own BSS as interference power. Therefore, it is possible to measure interference power without causing the other STAs 100-1 or the AP 200-1 in its own BSS to stop communication. Therefore, it is possible to achieve both the observation of interference power and maintenance of communication efficiency.

In addition, the aforementioned reception power notification frame includes a frame that is communicated for a purpose other than communication of the reception power information. Therefore, it is possible to reduce the amount of communication as compared with a case in which a frame exclusively for communicating the interference power information is prepared.

### <4. Second embodiment>

Next, a second embodiment of the present disclosure will be described. In the second embodiment, only STAs 100-2 that have not transmitted UL frames provide notifications of interference power information to the AP 200-2.

### <4.1. Functions of device>

First, the respective functions of the STAs 100-2 and an AP 200-2 that are wireless communication devices according to the embodiment will be described. Note that description of functions that are substantially the same as the functions according to the first embodiment will be omitted.

### (Request for results of carrier sensing)

An AP 200-2 requests results of carrier sensing from STAs 100-2. Specifically, in a case in which UL frames in accordance with transmission permission frames have not been received, the AP 200-2 transmits carrier sensing result request frames indicating requests for transmitting results of carrier sensing to the STAs 100-2. In a case in which UL frames have not been received in a transmission period designated with a trigger frame from any of members of a UL-MU communication group that is a destination of a trigger frame, for example, a control unit 230 causes a data processing unit 210 to generate carrier sensing result request frames indicating requests for notifications of results of carrier sensing that have carrier sensing threshold value information and interference power information. The control unit 230 causes a wireless communication unit 220 to transmit the generated carrier sensing result request frames.

Note that the UL frames in accordance with the transmission permission frames may be UL frames that are transmitted by using all wireless communication resources, assignment of which has been provided in notifications through transmission permission frames. In other words, in a case in which the UL frames are received by using only a part of the assigned wireless communication resources, the control unit 230 determines UL frames in accordance with the transmission permission frames have not been received. In a case in which UL frames have not been transmitted at a part of the assigned frequencies (for example, the transmission path for the part of frequencies is in the busy state), for example, the control unit 230 transmits carrier sensing result request frames via the data processing unit 110 and he wireless communication unit 120.

### (Notification of result of carrier sensing)

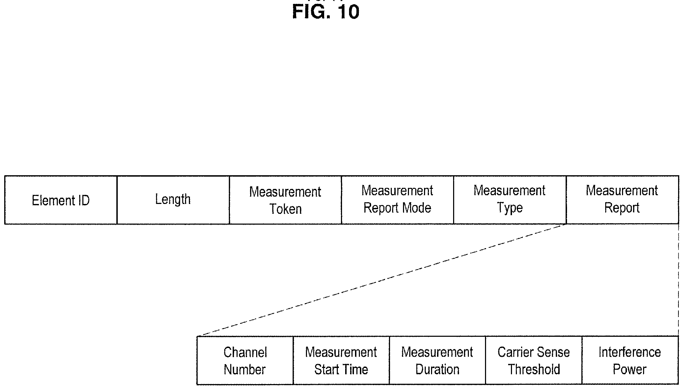

Each STA 100-2 provides a notification of a result of carrier sensing in response to a request from the AP 200-2. Specifically, the wireless communication unit 120 causes the storage unit 140 to store a result of carrier sensing performed in accordance with reception of a trigger frame. Thereafter, if a carrier sensing result request frame is received, the control unit 130 causes the data processing unit 110 to generate a carrier sensing result notification frame in which information indicating a result of carrier sensing stored in the storage unit 140 is stored. Then, the control unit 130 causes the wireless communication unit 120 to transmit the generated carrier sensing result notification frame. The result of carrier sensing is a carrier sensing threshold value used in the carrier sensing and interference power information measured in the carrier sensing. Note that a result of determining a state of the transmission path may be included as the result of the carrier sensing. Further, components of a carrier sensing result notification frame will be described with reference to FIG. 10. FIG. 10 is a diagram illustrating a configuration example of information elements in a carrier sensing result notification frame according to the embodiment.

The carries sensing result notification frame has information elements in which carrier sensing threshold value information and interference power information are stored. For example, the information elements are information elements based on an existing measurement report. As illustrated in FIG. 10, the information elements have fields Element ID, Length, Measurement Token, Measurement Report Mode, Measurement Type, and Measurement Report. Measurement Report has fields Carrier sensing Threshold and Interference Power in addition to Channel Number, Measurement Start Time, and Measurement Duration. In the Carrier sensing Threshold field, information indicating the setting carrier sensing threshold value used in carrier sensing is stored. Also, interference power information is stored in the Interference Power field. For example, information indicating a measurement report for providing notifications of carrier sensing threshold value information and interference power information is stored in the Measurement Type field by adding bits thereto, for example.

### (Decision of UL communication parameters based on result of carrier sensing)

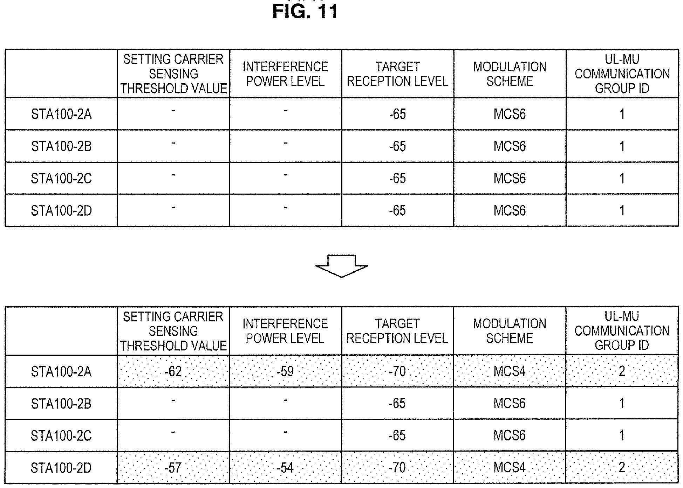

The AP 200-2 decides UL communication parameters on the basis of a result of carrier sensing provided in a notification. Specifically, if a carrier sensing result notification frame is received, the control unit 230 decides a target reception level from a setting carrier sensing threshold value and interference power information stored as a result of carrier sensing. Also, the control unit 230 decides a modulation scheme in accordance with the target reception level and decides other UL communication parameters such as a communication frequency. Further, UL communication parameter deciding processing will be specifically described with reference to FIG. 11. FIG. 11 is a diagram for describing an example of UL communication parameter deciding processing performed by the AP 200-2 according to the embodiment. In FIG. 11, a case in which a notification of a result of carrier sensing is provided without any UL frames received by the STAs 100-2A and 100-2D is assumed.

The control unit 230 decides the target reception level on the basis of the carrier sensing threshold value information and the interference power information. For example, if carrier sensing result notification frames are received from the STAs 100-2A and 100-2D, the control unit 230 calculates a difference between the setting carrier sensing threshold value provided in the notification through the carrier sensing result notification frame and the interference power level. In the example in FIG. 11, 3dB is calculated as the difference for both the STAs 100-2A and 100-2D. Next, the control unit 230 updates the target reception level set for UL-MU communication in the past on the basis of the calculated difference. In the example in FIG. 11, the target reception level is updated to -70 dBm by 5dB being subtracting on the basis of the calculated difference 3 dB since the target reception level has been set to be -65 dBm for both the STAs 100-2A and 100-2D.

In addition, the control unit 230 decides a modulation scheme on the basis of the target reception level after the change. For example, since the target reception level has been lowered from -65 dBm to -70 dBm for the STAs 100-21A and 100-2D, the modulation scheme is lowered from MCS6 to MCS4.

Note that in a case in which a notification of a result of carrier sensing is provided for each frequency, a communication frequency in UL-MU communication may be decided on the basis of the result of carrier sensing for each frequency similarly to the first embodiment.

### (Decision of multiple access communication group based on result of carrier sensing)

The AP 200-2 decides a multiple access communication group on the basis of a result of carrier sensing provided in a notification. Specifically, the control unit 230 reviews a UL-MU communication group on the basis of a target reception level calculated from interference power information stored in a received carrier sensing result notification frame. Although UL-MU communication is performed in one group in the past, a group with a group ID of "1" to which the STAs 100-2B and 100-2C belong as members and a group with a group ID of "2" to which the STAs 100-2A and 100-2D belong as members are formed in conjunction with a change in the target reception level in the example in FIG. 11, for example.

Note that the example in which one group is divided into two groups has been described in the example in FIG. 11, the UL-MU communication may be performed in the one original group without being divided. In the example in FIG. 11, the one UL-MU communication group maybe maintained by the target reception level of the STAs 100-2B and 100-2C being changed to -70 dBm, for example. Note that the modulation scheme is also changed from MCS6 to MCS4 in this case.

### <4.2. Flow of processing>

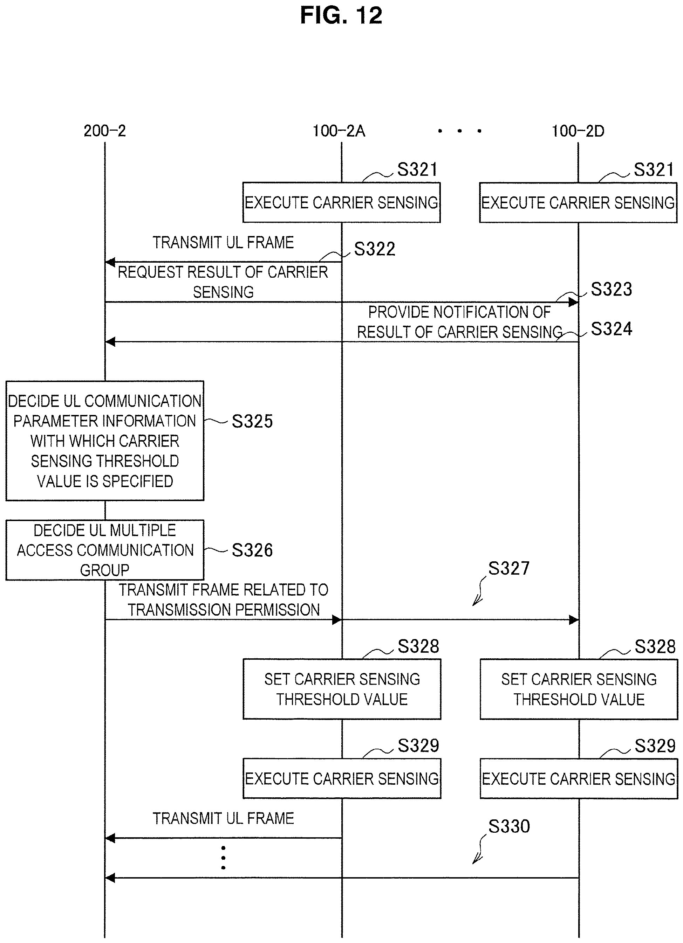

Next, a flow of processing of the wireless communication system according to the embodiment will be described with reference to FIG. 12. FIG. 12 is a sequence diagram conceptually illustrating an example of the processing of the wireless communication system according to the embodiment.

If transmission permission frames are received from the AP 200-2, the STAs 100-2A to 100-2D execute carrier sensing (Step S321). Then, the STAs 100-2A to 100-2C transmit UL frames to the AP 200-2 since the state of the transmission path is the idle state (Step S322). Meanwhile, the STA 100-2D does not transit a UL frame since the state of the transmission path is the busy state. Therefore, the AP 200-2 requests a result of carrier sensing from the STA 100-2D (Step S323). The STA 100-2D that has received the request provides a notification of the result of carrier sensing (Step S324).

The AP 200-2 that has received the result of carrier sensing decides UL communication parameter information with which carrier sensing threshold values are specified (Step S325). In addition, the AP 200-2 decides a UL multiple access communication group (Step S326). Then, the AP 200-2 transmits transmission permission frames to the STAs 100-2A to 100-2D (Step S327). The STAs 100-2A to 100-2D that have received the transmission permission frames set carrier sensing threshold values on the basis of the UL communication parameter information (Step S328). Next, the STAs 100-2A to 100-2D execute carrier sensing (Step S329), and if it is determined that the state of the transmission path is the idle state, the STAs 100-2A to 100-2D transmit UL frames (Step S330).

Next, processing of the STAs 100-2 and the AP 200-2 according to the embodiment will be individually described. Note that description of processing that is substantially the same as the processing in the first embodiment will be omitted.

### (UL communication parameter information notification processing of AP)

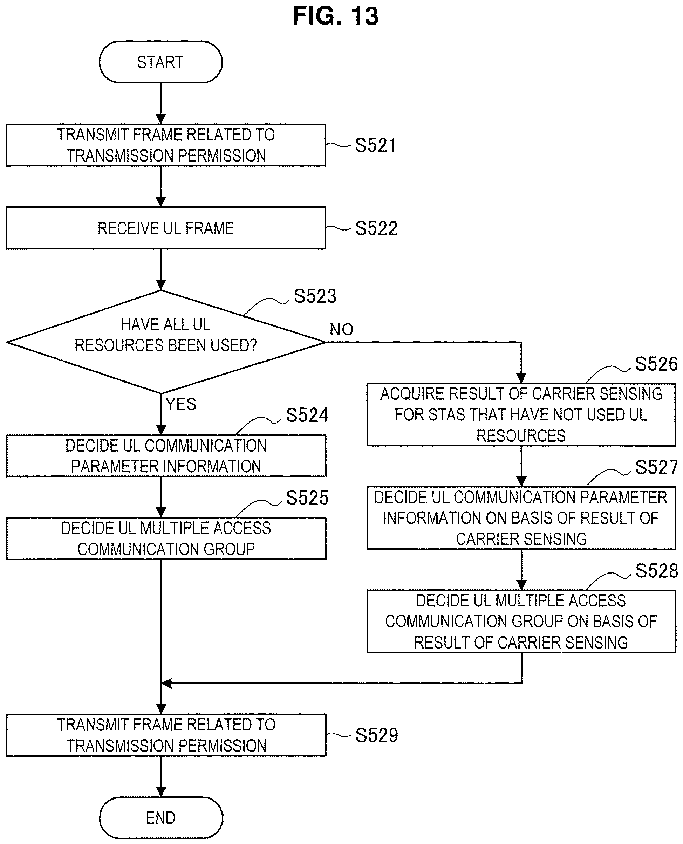

Next, UL communication parameter information notification processing performed by the AP 200-2 will be described with reference to FIG. 13. FIG. 13 is a flowchart conceptually illustrating an example of UL communication parameter information notification processing performed by the AP 200-2 according to the embodiment.

The AP 200-2 transmits transmission permission frames to STAs 100-2 (Step S521). Specifically, the control unit 230 causes the data processing unit 210 to generate trigger frames, in which UL communication parameter information is stored, which are directed to the STAs 100-2 that are members of the UL-MU communication group and causes the wireless communication unit 220 to transmit the generated trigger frames.

Next, the AP 200-2 receives UL frames from the STAs 100-2 (Step S522). Specifically, the wireless communication unit 220 receives multiplexed UL frames from the STAs 100-2 in a predetermined period after the transmission of the trigger frames.

Next, the AP 200-2 determines whether or not all UL resources have been used (Step S523). Specifically, the control unit 230 determines whether or not UL resources (for example, frequencies, times, spaces, and the like) assigned to the received UL frames have fully been used.

In a case in which it is determined that all the UL resources have been used (Step S523/YES), the AP 200-2 decides UL communication parameter information (Step S524) and decides a UL multiple access communication group (Step S525). Specifically, the control unit 230 decides the UL communication parameter information and the UL-MU communication group on the basis of parameters such as buffer statuses of the STAs 100-2.

Meanwhile, if it is determined that at least a part of UL resources has not been used (Step S523/NO), the AP 200-2 requests result of carrier sensing from STAs 100-2 that have not used the UL resources (Step S526). Specifically, the control unit 230 causes the data processing unit 210 to generate carrier sensing result request frames directed to the STAs 100-2 to which UL frequencies, times, spaces, and the like corresponding to unreceived UL frames have been assigned. Then, the control unit 230 causes the wireless communication unit 220 to transmit the generated carrier sensing result request frame.

Next, the AP 200-2 decides UL communication parameter information on the basis of the results of carrier sensing (Step S527) and decides a UL multiple access communication group (Step S528). Specifically, the control unit 230 changes a target reception level on the basis of the setting carrier sensing threshold value and the interference power information. Also, the control unit 230 rearrange the UL-MU communication group on the basis of the target reception level after the change.

Then, the AP 200-2 transmits transmission permission frames (Step S529). Specifically, the control unit 230 causes the data processing unit 210 to generate trigger frames in which UL communication parameter information such as the target reception level is stored and causes the wireless communication unit 220 to transmit the generated trigger frames.

### (Frame transmission processing using carrier sensing of STA)

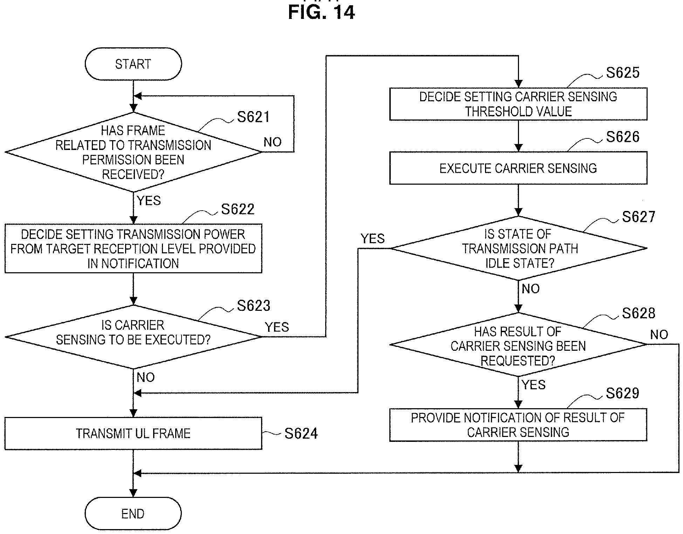

Next, frame transmission processing using carrier sensing performed by each STA 100-2 will be described with reference to FIG. 14. FIG. 14 is a flowchart conceptually illustrating an example of frame transmission processing using carrier sensing performed by the STA 100-2 according to the embodiment.

The STA 100-2 determines whether or not a transmission permission frame has been received (Step S621). Specifically, the control unit 130 determines whether or not a trigger frame has been received from the AP 200-2.

If it is determined that the transmission permission frame has been received (Step S621/YES), the STA 100-2 decides transmission power from the target reception level provided in notifications (Step S622). Specifically, the control unit 130 decides setting transmission power from the target reception level stored in the received trigger frame and the propagation loss.

Next, the STAs 100-2 determine whether or not to execute carrier sensing (Step S623). Specifically, the control unit 130 determines whether or not to execute carrier sensing on the basis of information which is stored in the received trigger frames and indicates whether or not to execute carrier sensing.

If it is determined that the carrier sensing is not to be executed (Step S623/NO), the STAs 100-2 transmit UL frames without executing carrier sensing (Step S624). Specifically, the control unit 130 causes the wireless communication unit 120 to transmit UL frames without executing carrier sensing.

Meanwhile, if it is determined that the carrier sensing is to be executed (Step S623/YES), the STAs 100-2 set carrier sensing threshold values (Step S625) and execute carrier sensing (Step S626). Specifically, the control unit 130 decides setting carrier sensing threshold values on the basis of amounts of change in the setting transmission power and causes the wireless communication unit 120 to execute carrier sensing using the setting carrier sensing threshold values. Note that the setting carrier sensing threshold value and the interference power information used in the carrier sensing are stored in the storage unit 140 as a result of the carrier sensing.

Next, if it is determined that the state of the transmission path is the idle state (Step S627/YES), the STAs 100-2 transmit UL frames. Specifically, if it is determined that the transmission path is vacant as a result of the carrier sensing, the control unit 130 causes the wireless communication unit 120 to transmit UL frames.

Meanwhile, if it is determined that the state of the transmission path is the busy state (Step S627/NO), the STAs 100-2 determine whether or not results of carrier sensing have been requested (Step S628). Specifically, if it is determined that the transmission path is in use due to carrier sensing, the control unit 130 interrupts the transmission of the UL frames and waits for reception of carrier sensing result request frames.

If it is determined that the results of carrier sensing have been requested (Step S628/YES), the STAs 100-2 provide notifications of the results of carrier sensing (Step S629). Specifically, if the carrier sensing result request frames are received, the control unit 130 causes the data processing unit 110 to generate carrier sensing result notification frames in which the setting carrier sensing threshold values and the interference power information stored in the storage unit 140 are stored. Then, the control unit 130 causes the wireless communication unit 120 to transmit the generated carrier sensing result notification frames.

### <4.3. Summary of second embodiment>

According to the second embodiment of the present disclosure, the AP 200-2 transmits carrier sensing result request frames in a case in which frames have not been received in accordance with frames related to transmission permission as described above. Therefore, it is possible to acquire interference power information only for the STAs 100-2 that are estimated to have not been able to transmit the UL frames due to carrier sensing. Accordingly, it is possible to reduce wireless communication resources used for communicating interference power information.

Also, the AP 200-2 receives carrier sensing result notification frames corresponding to carrier sensing result request frames, and the aforementioned first communication parameter information is decided on the basis of the carrier sensing result notification frames. Therefore, it is possible to avoid interruption of transmission of the UL frames due to carrier sensing in the next UL-MU communication by UL communication parameters (for example, a target reception level), with which a carrier sensing mode is specified on the basis of results of carrier sensing, being decided.

In addition, information indicating threshold values of carrier sensing is stored in the aforementioned carrier sensing result notification frames. Therefore, it is possible to decide the carrier sensing threshold values that is used in the next UL-MU communication on the basis of the carrier sensing threshold values used in carrier sensing performed when it is determined that the state of the transmission path is the busy state. Accordingly, it is possible to cause the STAs 100-2 to more reliably set the carrier sensing threshold values higher than interference power and to cause the STAs 100-2 that are permitted to perform transmission to more reliably transmit the UL frames.

### <4.4. Modification example>

The second embodiment of the present disclosure has been described above. Note that the embodiment is not limited to the aforementioned example. Hereinafter, a modification example of the embodiment will be described.

In a modification example of the embodiment, the AP 200-2 may change UL communication parameter information and a UL multiple access communication group without exchanging frames related to results of carrier sensing. Specifically, the control unit 230 estimates interference power information on the basis of the UL communication parameter information. More specifically, in a case in which frames in accordance with the transmission permission frames have not been received, the control unit 230 estimates interference power information on the basis of UL communication parameter information stored in transmitted transmission permission frames.

In a case in which UL frames have not been received from a part of STAs 100-2 from among the members of the UL-MU communication group after transmission of trigger frames related to UL-MU communication, for example, the control unit 230 acquires communication parameter information (for example, a target reception level) designated for the part of STAs 100-2. Then, the control unit 230 changes the target reception level to a value that is lower than the acquired target reception level. Note that the control unit 230 rearranges the UL-MU communication group in conjunction with the change in the target reception level. Then, the control unit 230 provides a notification of the target reception level after the change to the part of STAs 100-2.

According to the modification example of the embodiment, the reception power information (interference power information) is acquired through estimation based on the first communication parameter information as described above. Therefore, it is possible to properly control carrier sensing while omitting the exchanging frames related to results of carrier sensing. Accordingly, it is possible to enhance reliability with which the UL frames are transmitted from the STAs 100-2 that are permitted to perform transmission while reducing the amount of communication.

In addition, the aforementioned estimation is performed on the basis of the first communication parameter information stored in the frames related to transmission permission in a case in which frames have not been received in accordance with the frames related to transmission permission. Therefore, it is possible to reduce the amount of processing by the UL communication parameter information being updated only for the STAs 100-2 to which unused UL resources have been assigned.

### <5. Application example>

The technology according to the present disclosure can be applied to various products. For example, the STA 100 may be realized as mobile terminals such as smartphones, tablet personal computers (PCs), notebook PCs, portable game terminals, or digital cameras, fixed-type terminals such as television receivers, printers, digital scanners, or network storages, or car-mounted terminals such as car navigation devices. In addition, the STA 100 may be realized as terminals that perform machine to machine (M2M) communication (also referred to as machine type communication (MTC) terminals) such as smart meters, vending machines, remotely controlled monitoring devices, or point of sale (POS) terminals. Furthermore, the STA 100 may be wireless communication modules mounted in such terminals (for example, integrated circuit modules configured by one die).

On the other hand, for example, the AP 200 may be realized as a wireless LAN access point (also referred to as a wireless base station) which has a router function or does not have a router function. The AP 200 may be realized as a mobile wireless LAN router. The AP 200 may also be a wireless communication module (for example, an integrated circuit module configured with one die) mounted on such devices.

### [5-1. First application example]

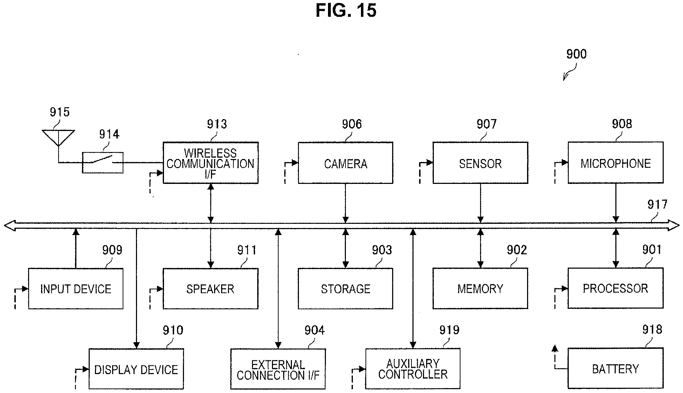

FIG. 15 is a block diagram illustrating an example of a schematic configuration of a smartphone 900 to which the technology of the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 913, an antenna switch 914, an antenna 915, a bus 917, a battery 918, and an auxiliary controller 919.

The processor 901 may be, for example, a central processing unit (CPU) or a system on chip (SoC), and controls functions of an application layer and other layers of the smartphone 900. The memory 902 includes random access memory (RAM) and read only memory (ROM), and stores data and programs executed by the processor 901. The storage 903 can include a storage medium such as a semiconductor memory or a hard disk. The external connection interface 904 is an interface for connecting an externally attachable device such as a memory card or a universal serial bus (USB) device to the smartphone 900.

The camera 906 has an image sensor, for example, a charge coupled device (CCD) or a complementary metal oxide semiconductor (CMOS), to generate captured images. The sensor 907 can include a sensor group including, for example, a positioning sensor, a gyro sensor, a geomagnetic sensor, an acceleration sensor, and the like. The microphone 908 converts sounds input to the smartphone 900 into audio signals. The input device 909 includes, for example, a touch sensor that detects touches on a screen of the display device 910, a key pad, a keyboard, buttons, switches, and the like, to receive operation or information input from a user. The display device 910 has a screen such as a liquid crystal display (LCD), or an organic light emitting diode (OLED) display to display output images of the smartphone 900. The speaker 911 converts audio signals output from the smartphone 900 into sounds.

The wireless communication interface 913 supports one or more wireless LAN standards of IEEE 802.11a, 11b, 11g, 11n, 11ac, and 11ad, to establish wireless communication. The wireless communication interface 913 can communicate with another device via a wireless LAN access point in an infrastructure mode. In addition, the wireless communication interface 913 can directly communicate with another device in a direct communication mode such as an ad hoc mode or Wi-Fi Direct (registered trademark). Note that, Wi-Fi Direct is different from the ad hoc mode. One of two terminals operates as an access point, and communication is performed directly between the terminals. The wireless communication interface 913 can typically include a baseband processor, a radio frequency (RF) circuit, a power amplifier, and the like. The wireless communication interface 913 may be a one-chip module on which a memory that stores a communication control program, a processor that executes the program, and a relevant circuit are integrated. The wireless communication interface 913 may support another kind of wireless communication scheme such as a cellular communication scheme, a near-field communication scheme, or a proximity wireless communication scheme in addition to the wireless LAN scheme. The antenna switch 914 switches a connection destination of the antenna 915 among a plurality of circuits (for example, circuits for different wireless communication schemes) included in the wireless communication interface 913. The antenna 915 has a single or a plurality of antenna elements (for example, a plurality of antenna elements constituting a MIMO antenna), and is used for transmission and reception of wireless signals through the wireless communication interface 913.

Note that the smartphone 900 may include a plurality of antennas (for example, antennas for a wireless LAN or antennas for a proximity wireless communication scheme, or the like), without being limited to the example of FIG. 15. In this case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 with each other. The battery 918 supplies electric power to each of the blocks of the smartphone 900 illustrated in FIG. 15 via power supply lines partially indicated by dashed lines in the drawing. The auxiliary controller 919 causes, for example, necessary minimum functions of the smartphone 900 to be operated in a sleep mode.

In the smartphone 900 illustrated in FIG. 15, the data processing unit 110, the wireless communication unit 120, and the control unit 130 described with reference to FIG. 2 may be mounted on the wireless communication interface 913. In addition, at least some of these functions may be mounted on the processor 901 or the auxiliary controller 919. By the control unit 130 providing a notification of interference power information to the AP 200 connected to the smartphone 900 via the data processing unit 110 and the wireless communication unit 120, for example, it is possible to enhance reliability of UL frame transmission while performing carrier sensing. Accordingly, it is possible to effectively utilize wireless communication resources while avoiding collision of communication.

Note that the smartphone 900 may operate as a wireless access point (software AP) as the processor 901 executes the function of an access point at an application level. In addition, the wireless communication interface 913 may have the function of a wireless access point.

### [5-2. Second application example]

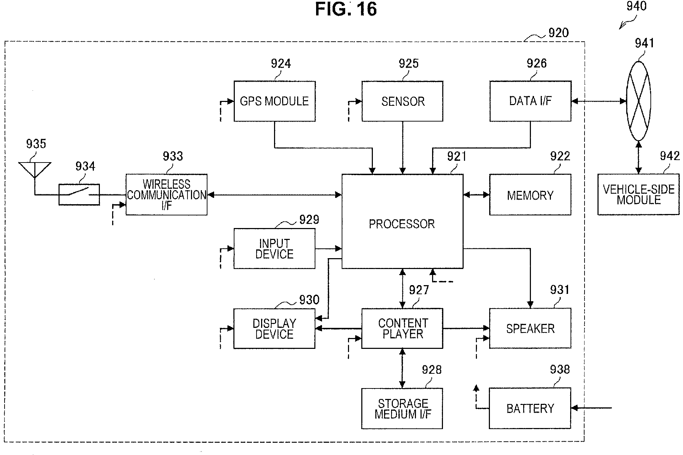

FIG. 16 is a block diagram illustrating an example of a schematic configuration of a car navigation device 920 to which the technology of the present disclosure can be applied. The car navigation device 920 includes a processor 921, a memory 922, a Global Positioning System (GPS) module 924, a sensor 925, a data interface 926, a content player 927, a storage medium interface 928, an input device 929, a display device 930, a speaker 931, a wireless communication interface 933, an antenna switch 934, an antenna 935, and a battery 938.

The processor 921 may be, for example, a CPU or an SoC controlling a navigation function and other functions of the car navigation device 920. The memory 922 includes RAM and ROM storing data and programs executed by the processor 921.

The GPS module 924 measures a position of the car navigation device 920 (for example, latitude, longitude, and altitude) using GPS signals received from a GPS satellite. The sensor 925 can include a sensor group including, for example, a gyro sensor, a geomagnetic sensor, a barometric sensor, and the like. The data interface 926 is connected with an in-vehicle network 941 via, for example, a terminal (not illustrated) to acquire data generated on the vehicle side such as car speed data.

The content player 927 reproduces content stored in a storage medium (for example, a CD or a DVD) inserted into the storage medium interface 928. The input device 929 includes, for example, a touch sensor that detects touches on a screen of the display device 930, buttons, switches, and the like to receive operation or information input from a user. The display device 930 has a screen such as an LCD or an OLED display to display images of the navigation function or reproduced content. The speaker 931 outputs sounds of the navigation function or reproduced content.

The wireless communication interface 933 supports one or more wireless LAN standards of IEEE 802.11a, 11b, 11g, 11n, 11ac, 11ad, and the like to execute wireless communication. The wireless communication interface 933 can communicate with another device via a wireless LAN access point in the infrastructure mode. In addition, the wireless communication interface 933 can directly communicate with another device in a direct communication mode such as an ad hoc mode or Wi-Fi Direct. The wireless communication interface 933 can typically have a baseband processor, an RF circuit, a power amplifier, and the like. The wireless communication interface 933 may be a one-chip module on which a memory that stores a communication control program, a processor that executes the program, and a relevant circuit are integrated. The wireless communication interface 933 may support another kind of wireless communication scheme such as a near-field communication scheme, a proximity wireless communication scheme, or the cellular communication scheme in addition to the wireless LAN scheme. The antenna switch 934 switches a connection destination of the antenna 935 among a plurality of circuits included in the wireless communication interface 933. The antenna 935 has a single or a plurality of antenna elements and is used for transmission and reception of wireless signals from and to the wireless communication interface 933.

Note that the car navigation device 920 may include a plurality of antennas, without being limited to the example of FIG. 16. In this case, the antenna switch 934 may be omitted from the configuration of the car navigation device 920.

The battery 938 supplies electric power to each of the blocks of the car navigation device 920 illustrated in FIG. 16 via power supply lines partially indicated by dashed lines in the drawing. In addition, the battery 938 accumulates electric power supplied from the vehicle side.

In the car navigation device 920 illustrated in FIG. 16, the data processing unit 110, the wireless communication unit 120, and the control unit 130 described with reference to FIG. 2 may be mounted on the wireless communication interface 933. In addition, at least some of these functions may be mounted on the processor 921. By the control unit 130 providing a notification of interference power information to the AP 200 connected to the car navigation device 920 via the data processing unit 110 and the wireless communication unit 120, for example, it is possible to enhance reliability of UL frame transmission while performing carrier sensing. Accordingly, it is possible to effectively utilize wireless communication resources while avoiding collision of communication.

In addition, the wireless communication interface 933 may operate as the aforementioned AP 200 and provide wireless connection to a terminal that a user on a vehicle has. By the control unit 230 providing a notification of transmission permission with which a carrier sensing mode is specified to a terminal connected to the car navigation device 920 via the data processing unit 210 and the wireless communication unit 220 on the basis of interference power information at that time, for example, it is possible to cause the terminal to more reliably transmit a UL frame while causing the terminal to execute carrier sensing. Accordingly, it is possible to effectively utilize wireless communication resources while avoiding collision of communication.

Further, the technology of the present disclosure may be realized as an in-vehicle system (or a vehicle) 940 including one or more blocks of the above-described car navigation device 920, the in-vehicle network 941, and a vehicle-side module 942. The vehicle-side module 942 generates vehicle-side data such as a vehicle speed, the number of engine rotations, or failure information and outputs the generated data to the in-vehicle network 941.

### [5-3. Third application example]

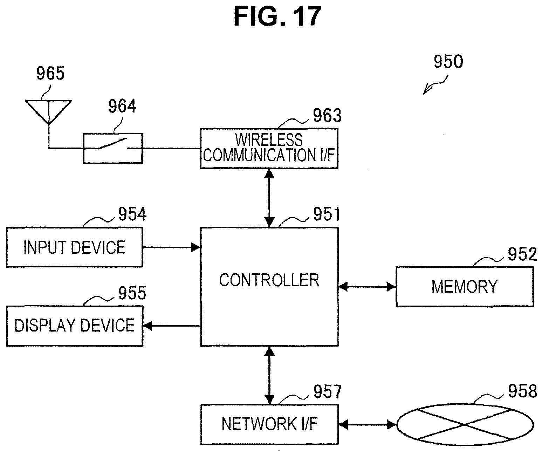

FIG. 17 is a block diagram illustrating an example of a schematic configuration of a wireless access point 950 to which the technology of the present disclosure can be applied. The wireless access point 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP) and operates various functions (for example, access limitation, routing, encryption, a fire wall, and log management) of the Internet Protocol (IP) layer and higher layers of the wireless access point 950. The memory 952 includes RAM and ROM and stores a program executed by the controller 951 and various kinds of control data (for example, a terminal list, a routing table, an encryption key, security settings, and a log).

The input device 954 includes, for example, a button or a switch, and receives operation performed by a user. The display device 955 includes an LED lamp and displays an operation status of the wireless access point 950.

The network interface 957 is a wired communication interface that connects the wireless access point 950 with a wired communication network 958. The network interface 957 may include a plurality of connection terminals. The wired communication network 958 may be a LAN such as Ethernet (registered trademark) or may be a wide area network (WAN).

The wireless communication interface 963 supports one or more wireless LAN standards of IEEE 802.11a, 11b, 11g, 11n, 11ac, 11ad, and the like to supply wireless connection to a nearby terminal as an access point. The wireless communication interface 963 can typically include a baseband processor, an RF circuit, and a power amplifier. The wireless communication interface 963 may be a one-chip module in which memory storing a communication control program, a processor executing the program, and relevant circuits are integrated. The antenna switch 964 switches a connection destination of the antenna 965 among a plurality of circuits included in the wireless communication interface 963. The antenna 965 includes one antenna element or a plurality of antenna elements and is used to transmit and receive a wireless signal through the wireless communication interface 963.

In the wireless access point 950 illustrated in FIG. 17, the data processing unit 210, the wireless communication unit 220, and the control unit 230 described with reference to FIG. 2 may be mounted on the wireless communication interface 963. In addition, at least some of these functions may be mounted on the controller 951. By the control unit 230 providing a notification of transmission permission with which a carrier sensing mode is specified to a terminal connected to the wireless access point 950 via the data processing unit 210 and the wireless communication unit 220 on the basis of interference power information, for example, it is possible to cause the terminal to more reliably transmit a UL frame while causing the terminal to execute carrier sensing. Accordingly, it is possible to effectively utilize wireless communication resources while avoiding collision of communication.

### <6. Conclusion>

As described above, according to the first embodiment of the present disclosure, it is possible to suppress interruption of frame transmission from the STA 100-1 that has been permitted to perform transmission due to carrier sensing by a carrier sensing mode of the STA 100-1 being decided on the basis of interference power information of the STA 100-1. That is, it is possible to more reliably increase probability that the STA 100-1 that has been permitted to perform transmission transmits a UL frame. Therefore, it is possible to effectively utilize wireless communication resources while avoiding collision of communication due to carrier sensing.

In addition, according to the second embodiment of the present disclosure, it is possible to acquire interference power information only for the STAs 100-2 that are estimated to have not been able to transmit the UL frames due to carrier sensing. Accordingly, it is possible to reduce wireless communication resources used for communicating interference power information.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, although the STAs 100 observe interference power in the aforementioned embodiments, the present technology is not limited to such an example. For example, the interference power may be observed by peripheral devices of the STAs 100. In this case, interference power information is provided from the peripheral devices to the STAs 100.

In addition, although the example in which the carrier sensing result notification frames are transmitted in accordance with the carrier sensing result request frames has been described in the aforementioned embodiments, the carrier sensing result notification frames may be spontaneously transmitted from the STAs 100 regardless of whether or not requests have been issued. Also, the STAs 100 may transmit the carrier sensing result notification frames only in a case in which the STAs 100 that have been permitted to perform transmission cannot transmit UL frames due to carrier sensing.

In addition, although the example in which the carrier sensing threshold value information and the interference power information are stored in the carrier sensing result notification frames has been described in the aforementioned embodiments, only the interference power information may be stored in the carrier sensing result notification frames. In this case, the UL communication parameter information and the UL multiple access communication group may be reviewed by the processing according to the first embodiment being performed by using the interference power information.

In addition, processing related to requests of results of carrier sensing, decision of UL communication parameters based on the results of carrier sensing, and decision of the multiple access communication group as described above may be performed in a case in which additional conditions are met. For example, the aforementioned processing may be executed in a case in which transmission of UL frames has been stopped due to carrier sensing a predetermined number of times.

For example, although the AP 200 and the STAs 100 perform multiple access communication in the aforementioned embodiments, the present technology is not limited to such an example. For example, an STA 100 that has a direct link to a plurality of STAs 100 and the plurality of STAs 100 may perform multiple access communication. Note that in this case, the aforementioned DL communication can be understood as "simultaneous communication from one device to a plurality of devices" and the aforementioned UL communication can be understood as "simultaneous communication from the plurality of devices to the one device".

Further, the effects described in this specification are merely illustrative or exemplified effects, and are not limitative. That is, with or in the place of the above effects, the technology according to the present disclosure may achieve other effects that are clear to those skilled in the art from the description of this specification.

Further, steps illustrated in the flowcharts of the above embodiment include not only processes which are chronologically performed in accordance with the described order but also processes which are not necessarily chronologically performed but performed in parallel or individually as well. Further, it is needless to say that even in steps which are processed chronologically, the order can be appropriately changed depending on circumstances.

In addition, it is also possible to produce a computer program for causing hardware incorporated in wireless communication devices 100 and 200 to exhibit functions equivalent to those of the respective functional configurations of the aforementioned wireless communication devices 100 and 200. In addition, a storage medium that stores the computer program therein is also provided.

Additionally, the present technology may also be configured as below.
(1) A wireless communication device including:
   an acquisition unit that acquires reception power information of a transmission path, which is observed for a first wireless communication device that communicates with the wireless communication device; and
   a wireless communication unit that transmits a frame related to transmission permission in which first communication parameter information, which is decided on the basis of the acquired reception power information, with which a carrier sensing mode is specified, is stored.
(2) The wireless communication device according to (1), in which the reception power information is acquired from a reception power notification frame that is received from the first wireless communication device by the wireless communication unit.
(3) The wireless communication device according to (1) or (2), in which the reception power information is acquired through estimation based on the first communication parameter information.
(4) The wireless communication device according to (3), in which the estimation is performed on the basis of the first communication parameter information that is stored in the frame related to transmission permission in a case in which a frame has not been received in response to the frame related to transmission permission.
(5) The wireless communication device according to any one of (1) to (4), in which the first communication parameter information includes information with which a threshold value for carrier sensing is specified.
(6) The wireless communication device according to any one of (1) to (5), in which the first communication parameter information includes information with which presence or absence of carrier sensing is specified.
(7) The wireless communication device according to any one of (1) to (6), in which communication for which the frame related to transmission permission indicates permission includes multiple access communication.
(8) The wireless communication device according to (7), in which a target of multiple access communication is decided on the basis of target reception power information that is decided from the reception power information.
(9) The wireless communication device according to (7) or (8), in which second communication parameter information of a type that is different from the first communication parameter information is stored in the frame related to transmission permission.
(10) The wireless communication device according to (9), in which the second communication parameter information includes information related to a modulation scheme or coding decided in accordance with the first communication parameter information.
(11) The wireless communication device according to any one of (1) to (10), in which the wireless communication unit transmits a carrier sensing result request frame in a case in which a frame has not been received in response to the frame related to transmission permission.
(12) The wireless communication device according to (11),
   in which the wireless communication unit receives a carrier sensing result notification frame corresponding to the carrier sensing result request frame, and
   the first communication parameter information is decided on the basis of the carrier sensing result notification frame.
(13) The wireless communication device according to (12), in which information indicating a threshold value for the carrier sensing is stored in the carrier sensing result notification frame.
(14) A wireless communication device including:
   a wireless communication unit that transmits a reception power notification frame in which reception power information of a frequency band, which is observed for the wireless communication device, is stored, and receives a frame related to transmission permission in which first communication parameter information is stored after the transmission of the reception power notification frame; and
   a control unit that controls carrier sensing for transmission of a frame that is permitted to be transmitted by the frame related to transmission permission on the basis of the first communication parameter information.
(15) The wireless communication device according to (14), further including:
   an observation unit that observes reception power related to the reception power information,
   in which the reception power information includes reception power information observed for an electric wave transmitted from a device other than another wireless communication device that belong to a group of wireless communication networks to which the wireless communication device belongs.
(16) The wireless communication device according to (14) or (15), in which the control unit decides presence or absence of carrier sensing or a threshold for the carrier sensing on the basis of the first communication parameter information.
(17) The wireless communication device according to any one of (14) to (16),
   in which the first communication parameter information includes target reception power information that is decided from the reception power information, and
   the control unit decides transmission power for transmission of the frame that is permitted to be transmitted in accordance with the target reception power information.
(18) The wireless communication device according to any one of (14) to (17), in which the reception power notification frame includes a frame that is communicated for another purpose other than communication of the reception power information.
(19) A wireless communication method including, by a processor:
   acquiring reception power information of a transmission path, which is observed for a first wireless communication device that communicates with a second wireless communication device; and
   transmitting a frame related to transmission permission in which first communication parameter information, which is decided on the basis of the acquired reception power information, with which a carrier sensing mode is specified, is stored.
(20) A wireless communication method including, by a processor to:
   transmitting a reception power notification frame in which reception power information of a frequency band, which is observed for a first wireless communication device, is stored, and receiving a frame related to transmission permission in which first communication parameter information is stored after the transmission of the reception power notification frame; and
   controlling carrier sensing for transmission of a frame that is permitted to be transmitted by the frame related to transmission permission on the basis of the first communication parameter information.

### Reference Signs List

- 100: STA
- 200: AP
- 110, 210: data processing unit
- 120, 220: wireless communication unit
- 130, 230: control unit
- 140, 240: storage unit

## Claims

1. A wireless communication device comprising:
an acquisition unit that acquires reception power information of a transmission path, which is observed for a first wireless communication device that communicates with the wireless communication device; and
a wireless communication unit that transmits a frame related to transmission permission in which first communication parameter information, which is decided on a basis of the acquired reception power information, with which a carrier sensing mode is specified, is stored.

2. The wireless communication device according to claim 1, wherein the reception power information is acquired from a reception power notification frame that is received from the first wireless communication device by the wireless communication unit.

3. The wireless communication device according to claim 1, wherein the reception power information is acquired through estimation based on the first communication parameter information.

4. The wireless communication device according to claim 3, wherein the estimation is performed on a basis of the first communication parameter information that is stored in the frame related to transmission permission in a case in which a frame has not been received in response to the frame related to transmission permission.

5. The wireless communication device according to claim 1, wherein the first communication parameter information includes information with which a threshold value for carrier sensing is specified.

6. The wireless communication device according to claim 1, wherein the first communication parameter information includes information with which presence or absence of carrier sensing is specified.

7. The wireless communication device according to claim 1, wherein communication for which the frame related to transmission permission indicates permission includes multiple access communication.

8. The wireless communication device according to claim 7, wherein a target of multiple access communication is decided on a basis of target reception power information that is decided from the reception power information.

9. The wireless communication device according to claim 7, wherein second communication parameter information of a type that is different from the first communication parameter information is stored in the frame related to transmission permission.

10. The wireless communication device according to claim 9, wherein the second communication parameter information includes information related to a modulation scheme or coding decided in accordance with the first communication parameter information.

11. The wireless communication device according to claim 1, wherein the wireless communication unit transmits a carrier sensing result request frame in a case in which a frame has not been received in response to the frame related to transmission permission.

12. The wireless communication device according to claim 11,
wherein the wireless communication unit receives a carrier sensing result notification frame corresponding to the carrier sensing result request frame, and
the first communication parameter information is decided on a basis of the carrier sensing result notification frame.

13. The wireless communication device according to claim 12, wherein information indicating a threshold value for the carrier sensing is stored in the carrier sensing result notification frame.

14. A wireless communication device comprising:
a wireless communication unit that transmits a reception power notification frame in which reception power information of a frequency band, which is observed for the wireless communication device, is stored, and receives a frame related to transmission permission in which first communication parameter information is stored after the transmission of the reception power notification frame; and
a control unit that controls carrier sensing for transmission of a frame that is permitted to be transmitted by the frame related to transmission permission on a basis of the first communication parameter information.

15. The wireless communication device according to claim 14, further comprising:
an observation unit that observes reception power related to the reception power information,
wherein the reception power information includes reception power information observed for an electric wave transmitted from a device other than another wireless communication device that belong to a group of wireless communication networks to which the wireless communication device belongs.

16. The wireless communication device according to claim 14, wherein the control unit decides presence or absence of carrier sensing or a threshold for the carrier sensing on a basis of the first communication parameter information.

17. The wireless communication device according to claim 14,
wherein the first communication parameter information includes target reception power information that is decided from the reception power information, and
the control unit decides transmission power for transmission of the frame that is permitted to be transmitted in accordance with the target reception power information.

18. The wireless communication device according to claim 14, wherein the reception power notification frame includes a frame that is communicated for another purpose other than communication of the reception power information.

19. A wireless communication method comprising, by a processor:
acquiring reception power information of a transmission path, which is observed for a first wireless communication device that communicates with a second wireless communication device; and
transmitting a frame related to transmission permission in which first communication parameter information, which is decided on a basis of the acquired reception power information, with which a carrier sensing mode is specified, is stored.

20. A wireless communication method comprising, by a processor to:
transmitting a reception power notification frame in which reception power information of a frequency band, which is observed for a first wireless communication device, is stored, and receiving a frame related to transmission permission in which first communication parameter information is stored after the transmission of the reception power notification frame; and
controlling carrier sensing for transmission of a frame that is permitted to be transmitted by the frame related to transmission permission on a basis of the first communication parameter information.
